# EUROPEAN PATENT SPECIFICATION

(11) **EP 1 772 197 B1**
(45) Date of publication and mention of the grant of the patent: **23.12.2009**
(21) Application number: 06121921.8
(22) Date of filing: 06.10.2006
(51) Int. Cl.: B05D 3/06, B05D 3/04, B65G 49/04, B65G 17/20

(54) **Irradiation apparatus comprising a conveying system**
Bestrahlungsvorrichtung beinhalted ein Fördersystem
Appareil d'irradiation comportant un systeme de transport

(30) Priority: 07.10.2005 FI 20051010
(43) Date of publication of application: 11.04.2007
(73) Proprietor: Sasmetor Oy, 18300 Heinola (FI); Tikkurila Coatings Oy, 01300 Vantaa (FI)
(72) Inventor: Sarkkinen, Raimo, FI-18200, Heinola (FI); Soljamo, Kari, FI-00840, Helsinki (FI)
(74) Representative: Heikkinen, Esko Juhani

(56) References cited:
- DE-A1- 19 804 202
- DE-A1-102004 023 536
- DE-A1-102004 023 538
- DE-U1- 20 203 407

## Description

### Technical field

The invention relates to an irradiation apparatus, wherein an object is treated with radiation, especially with ultraviolet radiation (UV), in a space containing a shielding gas. The invention is particularly useful in a coating process, in which a coating applied on an object is set with UV radiation in a space containing carbon dioxide.

### Technical background

The coating of objects and especially three-dimensional (3D) objects is performed by using coating agents which are cured with UV radiation. The curing reactions of UV surface finishing agents are inhibited by oxygen, which is why the setting involves the use of carbon dioxide as a shielding gas.

One UV irradiation apparatus is prior known from Utility model publication DE 202 03 407 U1, another from DE 10 2004 023 538 A1.

### Summary of the invention

An irradiation apparatus as set forth in claim 1 has now been invented.

The irradiation apparatus of the invention comprises
- an irradiation chamber, having a front wall, a rear wall, side walls connecting the same, and a floor,
- an array of radiation sources for supplying the irradiation chamber with radiation,
- a shielding gas mechanism for supplying the irradiation chamber with a shielding gas,
- a conveyor, which is provided with at least one suspension member, on which is placed an object to be coated and which conveyor is operated for carrying the object in and out of the radiation chamber, such that the object descends into the chamber from its front wall side and exits from the rear wall side.

The radiation may be especially UV radiation.

The shielding gas may be particularly of a type that inhibits the adverse effect of oxygen. The shielding gas is preferably heavier than air, especially carbon dioxide. It is delivered into the irradiation chamber preferably by way of the chamber floor. It is preferred that, in order to obviate turbulences, the gas be delivered into the irradiation chamber at a low rate of gas flow.

According to a first independent feature of the invention, the suspension member includes a shank, which is rigidly connected to the conveyor for hanging down therefrom and which is provided with a joint capable of bending at least in the conveyor's traveling direction. By virtue of the bending joint, the lowering and lifting of an object respectively into and out of the irradiation chamber proceed in vertical direction. Accordingly, there is no need for extra landing or lifting space on floor level. There is no need for designated standby spaces, either. According to one embodiment, the suspension member only includes one shank attached for hanging, most preferably straight downward, and having the object suspended thereon. According to another embodiment, the suspension member has its shank (shanks) fitted with a support for placing the object thereon.

According to a second independent feature of the invention, at least one wall of the irradiation chamber is inwardly inclined, and neither are the others are not outwardly inclined. Consequently, the chamber has a cross-sectional area which becomes smaller in upward direction. Thus, the chamber is easily manageable in terms of shielding gas losses as the heavier-than-air shielding gas remains well inside because of the chamber's configuration. Most preferably, all of the walls are inwardly inclined. Thus, the chamber may have the shape of a truncated cone. The chamber's shape also provides a capability of disposing the irradiation units in the top portion and side walls of the apparatus so as to establish a uniform radiation field in the chamber. An objective in UV curing is that, during the course of a dwell time, the object to be irradiated is exposed to a radiation dose in the UVA and/or UW range of at least 250 mJ/cm² (new standard). Uniform irradiation is also promoted by means of coatings.

According to a third independent feature of the invention, the irradiation chamber is surrounded by a protective housing, which is provided with a one or more openings so that the object can be passed inside and out of the protective housing. This way, the escape of shielding gas from the irradiation chamber and its admission to the environment is discouraged. The opening is most preferably located in the top portion or the protective housing. In the best case, the opening is closed by a hood with an open only from below. There may be for example one or two openings, especially one opening.

According to a fourth independent feature of the invention, the irradiation chamber is partially covered with a lid provided with a slot for the suspension member, which is codirectional with the conveyor. This discourages the escape of shielding gas from the irradiation chamber.

According to a fifth independent feature of the invention, the object to be irradiated can be rotated in the irradiation chamber. This contributes to the homogeneous setting of all object surfaces.

According to a sixth independent feature of the invention, the array of irradiation sources comprises radiation sources disposed for equal radiation in pairs or individually for providing the curing zone with a homogeneous radiation field in line with the object. The homogeneity of UV radiation reaching an object may be ascertained by rotating the object not less than once and not more than 5 times within the irradiation units' range of action.

According to a seventh independent feature of the invention, the array of irradiation sources comprises radiation sources, which are located so that major part of the heath produced by the lamps can be led outside the irradiation chamber. The lamps may be isolated from the irradiation chamber by means of a transparent window. The radiation sources can be behind the windows outside the irradiation chamber or encapsulated inside the chamber for conducting the resulting heat outside. Thus, some of the heat produced in the radiation sources can be conducted outside the apparatus and temperature in the irradiation chamber can be maintained highly consistent. Such implementation contributes to maintaining a stability of the apparatus and works against turbulence caused by the warming of a shielding gas and against increase of the oxygen content of a shielding gas in the irradiation chamber. The windows are most preferably made of quartz glass.

According to an eighth independent feature of the invention, part of the irradiation chamber is coated on the inside with a material reflective of the applied radiation. The coating is most preferably performed by encapsulation. Consisting of a material reflective of UV radiation, the chamber's lining must be capable of reflecting UV radiation as effectively as possible within UVA, UVB, UVC and UVV ranges. The material can be smooth, structured or hammered in terms of its surface texture.

According to a ninth independent feature of the invention, the apparatus comprises a circling conveyor and the irradiation chamber is surrounded by a protective housing, in which the conveyor returns to the supply point.

### Drawings

The accompanying drawings constitute a part of the specification and relate to the following detailed description regarding a few embodiments of the invention. In the drawings,

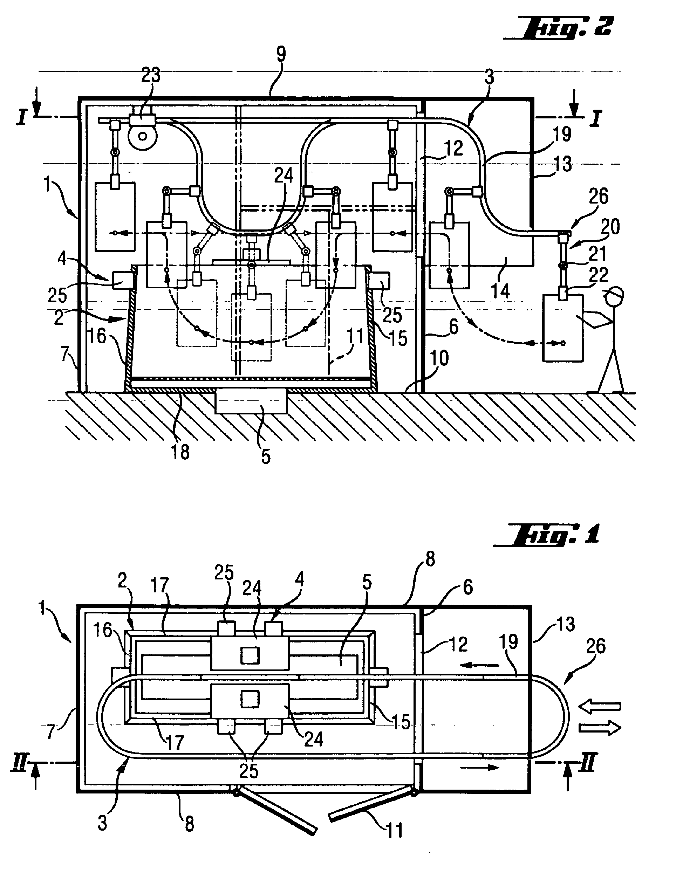

- fig. 1 shows a top view of an irradiation apparatus sectioned along I - I in fig. 2
- fig. 2 shows a section view II - II of the apparatus of fig. 1
- fig. 3 shows another irradiation apparatus sectioned along III - III in fig. 4
- fig. 4 shows the apparatus of fig. 3 in cross-section along IV - IV.

### Detailed description regarding some embodiments of the invention

The major components in an irradiation apparatus of the invention according to the drawings include a protective housing 1, an irradiation chamber 2, a conveyor 3, radiation sources 4 and a shielding gas mechanism 5.

The protective housing 1 constitutes an elongated space surrounding the irradiation chamber 2. The housing space has a front wall 6, a rear wall 7, longer side walls 8 connecting the same, a ceiling 9 and a floor 10. One of the side walls is provided with a closeable entry and exit door 11. The front wall's top portion includes an opening 12. The side walls and the ceiling extend across this opening forward of the front wall and are connected by an end panel 13. This results in a hood-shaped end space, provided with a downward opening inlet 14. The front panel has its bottom edge at a slightly higher level than the bottom edge of the side walls' extensions.

The irradiation chamber 2 has a front wall 15, a real wall 10, and side walls 17 connecting the same. The walls are most preferably inclined inwards. The walls constitute a tight casing. The chamber has its floor provided with a perforated plate or a pipe system, whereby the chamber is supplied with carbon dioxide by means of the shielding gas mechanism 5. It is beneficial to seek such a floor design which develops turbulence as little as possible. This is also pursued by maintaining the supply rate of the gas sufficiently low. The irradiation chamber 2 located longitudinally along one side of the housing 1.

The conveyor 3 is mounted on the ceiling of the protective housing 1. The conveyor comprises a circling chain 19, which is rigidly fitted with suspension shanks 20 perpendicularly downward. The suspension shanks are provided with a joint 21, which bends in the conveyor's traveling direction. The chain constitutes a circle, having its leading end in line with the inlet opening 14 and its trailing end in the back of the housing. The suspension shank has its bottom end provided with a bracket 22, on which the object to be irradiated is suspended outside the inlet opening. The chain enters inside the protective housing at the irradiation chamber 2 and returns from the side of the chamber. The chain is associated with drive mechanism and control equipment 23 therefor. The chain is supported by guides in such a way that at the forward end of the irradiation chamber the chain deflects downward, whereby the object suspended from the suspension shank descends into the chamber, and at the rear end of the irradiation chamber the chain deflects up again towards its horizontal upper run. The chain is likewise supported by guides in such a way that, in line with the inlet opening, it deflects downward on its way out of the housing and upward on its way towards the housing. The chain circle has its leading end extending forward of the end panel 13.

The object to be irradiated is placed to the bracket 22 of the chain's 19 suspension shank 20 at the leading end of the chain circle forward of the end panel 13. Carried by the chain, the object proceeds first through the inlet opening 14 up into the end space, from where it ascends and keeps proceeding into the housing space 1 by way of the opening 12. Upon reaching the forward end of the irradiation chamber 2, the object descends into the irradiation chamber and ascends out of it at the rear end of the chamber. The object returns at the upper level alongside the irradiation chamber, exits the housing space, and descends down from the inlet opening, whereupon it is released and replaced by placing the next object. The conveyor may operate nonstop.

By virtue or the bending joint 21 in the suspension shank 20, only a short distance is needed for lowering an object into the irradiation chamber 2 and for lifting it from the chamber. Thus, there is no need for extra landing or lifting space. The conical space, obtained by virtue of inclined walls, functions well at retaining carbon dioxide. A slight expansion of the protective housing 1 has also enabled the suspension shanks to travel in a lower position at the inlet point. Still, the protective housing is well sealed, which reduces the escape of carbon dioxide from the irradiation chamber and its admission to the environment.

The irradiation chamber 2 has its top portion centrally provided with cover plates 24, attached to the chamber's side walls 17 and leaving a gap therebetween, which is wide enough for the suspension shanks 20 to proceed. This reduces the escape of carbon dioxide from the chamber.

The irradiation apparatus 4 is provided with UV lamps 25 mounted on the side walls 17 and ceiling plates 24 of the irradiation chamber 2. The lamps are mounted in such a way that the major part of the heath produced by the lamps can be led outside the irradiation chamber. The lamps are set behind windows of quartz glass. The irradiation chamber has its walls 15, 16 and 17, ceiling plates 24, and floor 18 provided with reflective surfaces, such that radiation as uniform as possible can be focused on the object from every direction by means of the lamps and the reflective surfaces.

The irradiation apparatus also includes means in its suspension equipment for rotating the suspension shank 20.

The shielding gas mechanism 5 includes also a suction device for clearing the housing space floor of carbon dioxide that has found its way into the housing space. According to the invention, the consumption of carbon dioxide can be made very low and controlled. Nevertheless, it may be necessary to preclude the admission of carbon dioxide to the environment.

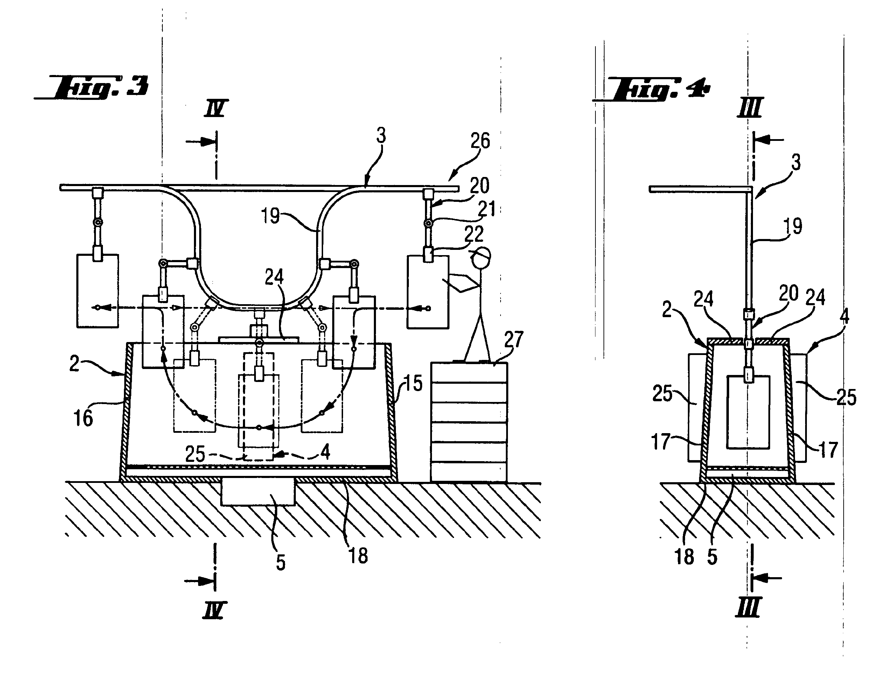

Figs. 3 and 4 depict an apparatus, in which the leading end circle 26 of a conveyor 3 has not been passed downward from the upper run, but the supply and the removal are handled on a podium 27.

## Claims

1. An irradiation apparatus, comprising
- an irradiation chamber (2), having a front wall, a rear wall, side walls connecting the same, and a floor,
- at least one radiation source (4) for supplying the irradiation chamber with radiation,
- a shielding gas mechanism (5) for supplying the irradiation chamber with a shielding gas,
- a conveyor, comprising a circling chain (19) which is fitted with at least one suspension shank (20), on which is placed an object to be irradiated, the chain being supported by guides in such a way that at the forward end of the chamber the chain deflects downwards, whereby the object placed on the suspension shank descends into the chamber, and at the rear end of the chamber the chain deflects up towards its horizontal upper run,
**characterized in that**
- the suspension is rigidly connected to the chain (19) for hanging down therefrom and is provided with a joint (21) bending at least in the chain's traveling direction.

2. An apparatus as set forth in claim 1, **characterized in that** at least one wall (15, 16, 17) of the irradiation chamber is inwardly inclined, nor are the others outwardly inclined.

3. An apparatus as set forth in claim 1 or 2, **characterized in that** the irradiation chamber is surrounded by a protective housing (1), which is provided with one or two openings (12) for passing the objects inside or out of the protective housing.

4. An apparatus as set forth in any of claims 1-3, **characterized in that** the irradiation chamber is partially covered with a lid (24) provided with a slot for the suspension member, which is codirectional with the conveyor.

5. An apparatus as set forth in any of claims 1-4, **characterized in that** it comprises means for rotating the object to be irradiated in the irradiation chamber.

6. An apparatus as set forth in any of claims 1-5, **characterized in that** the array of irradiation sources comprises radiation sources (25), which are isolated from the irradiation chamber by means of a transparent window.

7. An apparatus as set forth in any of claims 1-6, **characterized in that** part of the irradiation chamber is lined on the inside, most preferably encapsulated, with a material reflective of the applied radiation.

8. An apparatus as set forth in any of claims 1-6, **characterized in that** the irradiation chamber is surrounded by a protective housing, provided with an opening (12) which is open only from below.

9. The use of an irradiation apparatus as set forth in any of the preceding claims for setting the coating of objects by irradiation.

## Patentansprüche

1. Bestrahlungsvorrichtung, umfassend
- eine Bestrahlungskammer (2) mit einer Vorderwand, einer Rückwand, Seitenwänden, welche diese verbinden, und einem Boden
- mindestens eine Strahlungsquelle (4) zur Bereitstellung von Strahlung in der Bestrahlungskammer,
- eine Schutzgaseinrichtung (5) zur Bereitstellung von Schutzgas in der Bestrahlungskammer,
- ein Fördermittel, umfassend eine umlaufende Kette (19) die mit wenigstens einem Hängeschaft (20) versehen ist, an dem ein zu bestrahlendes Objekt angeordnet wird, wobei die Kette so durch Führungen getragen ist, dass an dem vorderen Ende der Kammer die Kette nach unten abgelenkt wird, wodurch das an dem Hängeschaft angeordnete Objekt in die Kammer abgesenkt wird und an dem hinteren Ende der Kammer die Kette nach oben zu ihrer horizontalen oberen Spur abgelenkt wird,
**dadurch gekennzeichnet, dass**
- der Hängeschaft (20) starr mit der Kette (19) verbunden ist, so dass er von ihr herunterhängt, und ein Gelenk (21) aufweist, welches zumindest in Laufrichtung der Kette biegbar ist.

2. Vorrichtung gemäß Anspruch 1, **dadurch gekennzeichnet, dass** zumindest eine Wand (15, 16, 17) der Bestrahlungskammer einwärts geneigt ist, und keine anderen auswärts geneigt sind.

3. Vorrichtung gemäß Anspruch 1 oder 2, **dadurch gekennzeichnet, dass** die Bestrahlungskammer von einem Schutzgehäuse (1) umgeben ist, welches ein oder zwei Öffnungen (12) aufweist, zum Führen der Objekte in das Innere des Schutzgehäuses oder heraus.

4. Vorrichtung gemäß einem der Ansprüche 1 bis 3, **dadurch gekennzeichnet, dass** die Bestrahlungskammer teilweise mit einem Deckel (24) abgedeckt ist, der einen Schlitz für den Hängeschaft aufweist, der mit dem Fördermittel in gleicher Richtung ausgerichtet ist.

5. Vorrichtung gemäß einem der Ansprüche 1 bis 4, **dadurch gekennzeichnet, dass** sie Mittel zur Drehung des zu bestrahlenden Objekts in der Bestrahlungskammer aufweist.

6. Vorrichtung gemäß einem der Ansprüche 1 bis 5, **dadurch gekennzeichnet, dass** die Strahlungsquellen -Anordnung Strahlungsquellen (25) umfasst, die durch ein transparentes Fenster von der Bestrahlungskammer getrennt sind.

7. Vorrichtung gemäß einem der Ansprüche 1 bis 6, **dadurch gekennzeichnet, dass** ein Teil der Bestrahlungskammer im Inneren mit einem für die angewandte Strahlung reflektierenden Material ausgekleidet ist, am meisten bevorzugt durch Verkapselung.

8. Vorrichtung gemäß einem der Ansprüche 1 bis 6, **dadurch gekennzeichnet, dass** die Bestrahlungskammer von einem Schutzgehäuse umgeben ist, welches eine Öffnung (12) aufweist, die nur von unten offen ist.

9. Verwendung einer Vorrichtung gemäß einem der vorhergehenden Ansprüche zur Härtung der Beschichtung von Objekten durch Strahlung.

## Revendications

1. Appareil d'irradiation, comprenant :
- une chambre d'irradiation (2) ayant une paroi avant, une paroi arrière, des parois latérales reliant celles-ci, et un plancher,
- au moins une source de rayonnement (4) pour fournir un rayonnement à la chambre d'irradiation,
- un mécanisme (5) à gaz de protection pour fournir un gaz de protection à la chambre d'irradiation,
- un convoyeur, comportant une chaîne (19) à mouvement circulaire munie d'au moins une jambe de suspension (20) sur laquelle est placé un objet à irradier, la chaîne étant supportée par des guides de telle manière qu'à l'extrémité avant de la chambre la chaîne s'incurve vers le bas, grâce à quoi l'objet placé sur la jambe de suspension descend jusque dans la chambre et que, à l'extrémité arrière de la chambre, la chaîne s'incurve vers le haut en direction de son parcours horizontal supérieur,
**caractérisé en ce que**
- la jambe de suspension fait corps avec la chaîne (19) pour pendre depuis celle-ci et est pourvue d'une articulation (21) fléchissant au moins dans la direction de défilement de la chaîne.

2. Appareil selon la revendication 1, **caractérisé en ce qu'**au moins une paroi (15, 16, 17) de la chambre d'irradiation est inclinée vers l'intérieur, les autres n'étant pas non plus inclinées vers l'extérieur.

3. Appareil selon la revendication 2, **caractérisé en ce que** la chambre d'irradiation est entourée par un boîtier protecteur (1) pourvu d'une ou deux ouvertures (12) pour faire passer les objets vers l'intérieur ou l'extérieur du boîtier protecteur.

4. Appareil selon l'une quelconque des revendications 1 à 3, **caractérisé en ce que** la chambre d'irradiation est partiellement couverte par un couvercle (24) pourvu d'une fente pour la jambe de suspension, qui a la même orientation que le convoyeur.

5. Appareil selon l'une quelconque des revendications 1 à 4, **caractérisé en ce qu'**il comprend un moyen pour faire tourner l'objet à irradier dans la chambre d'irradiation.

6. Appareil selon l'une quelconque des revendications 1 à 5, **caractérisé en ce que** la série de sources d'irradiation comprend des sources de rayonnements (25) isolées de la chambre d'irradiation à l'aide d'un hublot transparent.

7. Appareil selon l'une quelconque des revendications 1 à 6, **caractérisé en ce qu'**une partie de la chambre d'irradiation est revêtue intérieurement, de préférence surtout enfermée, à l'aide d'un matériau réfléchissant le rayonnement appliqué.

8. Appareil selon l'une quelconque des revendications 1 à 6, **caractérisé en ce que** la chambre d'irradiation est entourée par un boîtier protecteur pourvu d'une ouverture (12) qui ne s'ouvre que de dessous.

9. Utilisation d'un appareil selon l'une quelconque des revendications précédentes pour régler l'application d'un revêtement sur des objets par irradiation.
